Europäisches Patentamt

European Patent Office

Office européen des brevets

(11) Publication number: **0 214 790**
**A2**

# EUROPEAN PATENT APPLICATION

(21) Application number: **86306445.7**

(22) Date of filing: **20.08.86**

(51) Int. Cl.⁴: **B 05 D 7/04**
**C 08 J 7/04**

(30) Priority: **03.09.85 US 771757**

(43) Date of publication of application:
**18.03.87 Bulletin 87/12**

(84) Designated Contracting States:
**AT BE CH DE FR GB IT LI LU NL SE**

(71) Applicant: **MOBIL OIL CORPORATION**
**150 East 42nd Street**
**New York New York 10017 (US)**

(72) Inventor: **Park, Hee Chung**
**3 Charing Cross**
**Fairport New York 14450 (US)**

**Mount, Eldridge Milford, III**
**88 Country Downs Circle**
**Fairport New York 14450 (US)**

(74) Representative: **Cooper, John Anthony et al**
**Mobil Court 3 Clements Inn**
**London WC2A 2EB (GB)**

(54) Coated biaxially oriented film and method of preparing same.

(57) A biaxially oriented surface coated polypropylene film and improved method for the continuous production thereof which includes the steps of stretching a continuous essentially polypropylene web in the longitudinal direction, applying a liquid surface coating composition to one or both sides of the continuous web, preheating the coated film to a temperature sufficient to effect orientation, and orienting the resulting preheated coated film in the transverse direction without after-treatment steps such as corona discharge or flame treatment.

EP 0 214 790 A2

Description

## COATED BIAXIALLY ORIENTED FILM AND METHOD OF PREPARING SAME

The present invention relates to the art of polymeric films, and, in particular, to the field of oriented films with improved surface properties.

It has been known in the technology associated with polymeric films to provide such films with desired properties by various means. One way of affecting film properties is to adjust polymer composition and/or monomer content to obtain the desired characteristics. This method is considered particularly useful for manipulating properties such as film strengths, stretch, elasticity, etc. However, the surface characteristics of films are usually a result of the desired composition and polymer content, and it has not been considered practicable to provide desired surface properties by varying the film composition, etc.

A more practical method for providing desired surface characteristics from a technical standpoint has been to provide one or both sides of the film with layers having the desired properties. This allows the practitioner to engineer polymeric films with desired film properties, and then layer the film surface(s) to achieve required surface characteristics. Furthermore, surface layering permits the artisan to leave existing film process assemblies wholly or partially in place, while providing necessary additional equipment or augmenting, by modification or otherwise, existing equipment.

While this approach is satisfactory from a technical point of view, film surface coating has presented other problems relating to production, such as efficiency, space requirement, material cost, and product quality. Specifically, treatment of the surface of the various films may require multiple steps, expensive equipment, high energy, etc. These problems can be exacerbated in the case of films which are oriented, especially those which are biaxially oriented, since such films require additional or specialized processing steps.

Biaxially oriented films may be produced by stretching the film in two mutually perpendicular directions either simultaneously or sequentially. The preferred state of art method includes quenching of the hot web in a water bath and casting roll combination. The quenched web is then heated by a series of heat transfer rolls prior to longitudinally stretching. The uniaxially stretched web is then preheated for transverse direction stretching.

For example, U.S. Patent No. 4,391,767 to Pears shows a process for producing coated biaxially oriented synthetic linear polyester films derived essentially from ethylene glycol and terephthalic acid, which is preferably polyethylene terephthalate. Pears discloses longitudinally drawing a melt extruded substantially amorphous polyester film followed by application of a primer coating to one or both sides of the film and then drawing the coated film in the transverse direction whereby a primer coating of thickness of at least $2.5 \times 10^{-6}$ mm ($10^{-7}$ inch) is obtained. The primer coating is a thermosetting acrylic or methacrylic composition in which the acrylic or methacrylic component is crosslinkable, whereby the biaxially oriented and coated film can be heat set and recycled by re-extruding with fresh polyester. The primer coating and method of Pears does not confer a functional characteristic, such as heat sealability, to the base film, but is intended rather to alter the surface properties in order to make it more receptive to subsequent coating, printing, metallizing or other treatment. This process requires a longitudinal orientation followed by coating and removal of solvent in, for example, a drying oven and a heat setting step at high temperature before application of a functional coating to the surface of the base film.

U.K. Patent Specification No. 1,127,076 discloses a process for coating an orientable hydrophobic polymer with a thermoplastic polymer such that the coating or coatings on the layer of the polymer film must be at least fifty times thinner than the layer of film. The preferred base film polymers are polyethylene terephthalate and polypropylene because of their high melting point and tendency of these oriented film to shrink when heated near their melting point.

U.S. Patent No. 4,333,968 to Nahmias shows a method for producing multi-layer biaxially oriented polypropylene film adapted for heat sealing which includes extruding a polypropylene base film and orienting it in the longitudinal direction before extrusion coating a single layer of an ethylene-vinyl acetate copolymer having from 6% to 10% by weight vinyl acetate. The resin is hot melt extruded and requires maintenance of the coating composition at an elevated temperature. The composite film is then preheated at a heating rate of above 2.8°C (5°F) and below 22°C (40°F) per second, and then oriented in the transverse direction.

U.S. Patent No. 4,089,997 to Van Paesshen, et al. describes a process for adhering an anti-static layer to a dimensionally stable polyester film support, e.g., a film of polyethylene terephthalate, to an unstretched or only monoaxially stretched polyester film an anti-static layer from an aqueous coating composition. After drying the antistatic layer, the film is stretched in a direction perpendicular to the longitudinal directional.

U.S. Patent No. 4,225,644 to Tsuchiya, et al. describes a heat-sealable bi-axially oriented polypropylene composite film which is surface coated with a higher fatty acid amide singly or in combination with an anti-static agent and/or other agents. The orientation of the film is carried out after the step of coating.

In each of the disclosures described above, there are required steps associated with each process which can be considered a drawback to continuous high speed production of, for example, polypropylene film for packaging. It is, therefore, desirable to provide a bi-axially oriented film and an improved method for continuous high-speed production of bi-axially oriented essentially polypropylene film with enhanced surface properties.

The present invention provides a polypropylene film with improved surface properties, comprising a biaxially oriented polypropylene web having a solution-applied surface coating on one or both sides, the surface coating being applied between sequential machine direction and transverse direction orientation steps, the film requiring no after treatment steps. This invention also provides a process for the continuous production of a polypropylene web with improved surface properties which comprises drawing a continuous web of polypropylene film in the longitudinal direction; applying a liquid surface coating composition to one or both sides of the continuous web; thereafter preheating the coated film to a temperature sufficient to effect orientation; orienting the resultant preheated coated film in a transverse direction in the absence of any required after-treatment, preferably by use of a tenter frame.

In one embodiment functional components, e.g., polymers, can be blended in the base web so as to chemically react with components of the coating composition. Thus, for example, a blend of up to 5% by weight of a component such as maleic anhydride, polyacrylic acid polymers and copolymers, e.g., ethylene acrylic acid copolymer, is employed in the base web or as a skin on the base web to provide chemically reactive sites for casting compositions such as polyethylene imide, polyamides, and polyvinylidene chloride.

Also in a preferred embodiment the solution composition includes between 1 and 50% coating material based on solids content, preferably 4% to 35%. In the case of release and slip coating compositions, the range of coating material can be from 1% to 8%, and preferably 2% to 5% based on solids content. When the coating is a heat sealing composition, the range of material can be from 15% to 50%, and is preferably from 20%-35% based on solids content. One way in which the film can be so coated is to pass the film through a reservoir such as a pan which contains the liquid and then press roll the continuous web.

The continuous polypropylene web can be a single layer or a multilayer web having two or more layers, and preferably is a web with three layers.

In one embodiment, the polypropylene web is an opaque biaxially oriented polymer film such as that described in commonly assigned U.S. Patent No. 4,377,616 to Ashcraft, et al. Depending on the type of surface property desired, the surface coating material can be selected from acrylic polymers and copolymers, polyvinylidene chloride, polyethylene imine, polyamides, silicones, epoxy resins, styrene based polymers, and emulsifiable polyester.

One preferred surface coating composition comprises an acrylic polymer or copolymer formulated with silica and wax whereby the printability of the film surface and machinability are enhanced.

Another surface coating composition useful in the present invention is an interpolymer comprising acrylic acid, methacrylic acid and methyl methacrylate to impart the heat sealability to the film.

An additional surface coating composition comprises copolymers of vinylidene chloride and vinylchloride formulated with wax and silica additives to improve the sealability of the film.

Yet another surface coating composition for use in the invention includes polyvinylidene chloride polymers and copolymers to improve the oxygen barrier properties of the film. A coating which includes polyethylene imine or epoxy based resin promotes surface adhesion of ink, metal and film lamination, while polyurethane-containing coating compositions enhance the adhesive strength of laminations of complex film structures.

Another preferred surface coating composition includes an emulsion silicone polymer, a polyester and emulsion stabilizers whereby the film is provided with improved release properties as shown by the decrease in lap seal drag and improvements in hot packing of wrapped items. A surface coating composition including a silicone polymer, a catalyst system, and an emulsion stabilizer enhances the slip property of the film at both room temperature and 127°C (260°F).

In a preferred embodiment of this invention, the continuous web is drawn in a longitudinal direction in a stretch ratio of from 3:1 to 7:1, and oriented in the transverse direction in a stretch ratio of from 6:1 to 10:1, and is preferably stretched at a ratio of 5:1 in the longitudinal direction while at a stretch ratio of 8:1 in the transverse direction. In order to obtain the proper temperature for transversely orienting the coated mono-axially oriented film, a preheating temperature of from 138° to 204°C (280° to 400°F), and preferably 160° to 182°C (320° to 360°F) can be applied when the film includes 80% polypropylene. When the film includes 40% polypropylene, the preheating temperature applied to the film can be from 79° to 121°C (175° to 250°F), and is preferably from 88° to 104°C (190° to 220°F).

As a result of this process, a biaxially oriented polypropylene film, especially useful for packaging, can be produced by a combination process which includes extrusion, orientation and in-line coating procedures, without the necessity of expensive, secondary coating processes which require surface treating with a corona discharge or flame treatment. Furthermore, a base sheet having multilayers such as a coextruded three layer polypropylene web, can be in-line coated to produce good surface qualities, e.g., heat seal, slip, release, receptivity for printing ink or metal.

Moreover, by the in-line coating process of the present invention, the surface properties can be enhanced with much greater control and cheaper than by engineering different compositions and processing steps. The predictability of obtaining the desired coating renders the present process especially attractive for high speed manufacture of continuous polypropylene packaging film.

As discussed hereinabove, the present invention includes a method which may be employed in the high speed manufacture of oriented polypropylene films having enhanced surface properties which can be provided with high predictability of the required property as well as economical production. These results can be obtained with either single layer polypropylene film or multilayer polypropylene film in which the individual layers contain at least 40% of polypropylene polymer. Alternatively, the polypropylene product can be a coextruded multi-layer film, such as three layer polypropylene film. In this case, the skin layer can be chemically modified with added functional groups to further enhance the coating anchorage. Typical examples of functional groups include, inter alia, carboxylic acids, nitrates, oxazoline, and hydroxyls.

In accordance with a specific embodiment of the present invention, a polypropylene base web can be extruded and subsequently oriented in the machine direction bypassing the base web through a series of draw rolls utilizing conventional prior art film orientation techniques. The machine direction oriented base sheet can then be immersed in a coating composition in solution by drawing the film through a reservoir of the solution, such as a pan, and subsequently preheated in order to provide a softening temperature for orientation of the film in the transverse direction. An added advantage of heating the solution coated polypropylene base web is to drive off the solution.

The preheated polypropylene film is then stretched in the transverse direction by utilizing conventional film orientation equipment such as, for example, tenter frame. While in the past it has been necessary in many cases to control the preheating prior to transverse direction orientation, such as in U.S. Patent No. 4,333,968 to Nahmias, it is not necessary to control preheating in the present invention which requires a sophisticated heating and timing mechanism. Furthermore, also unlike the Nahmias disclosure, it is unnecessary to provide a hot melt extrusion for coating the continuous web.

In the present invention it is believed that when the machine direction oriented web is coated, it is sufficiently hot so that the heat is sufficient to form an adequate adhesion between the coating material and the web surface. In one embodiment the web can be passed over direct or reverse gravure rolls to provide exact coating weight. Polypropylene packaging film can be given good barrier properties which are very important in order to provide good moisture retention, render the film gas and flavor impervious, provide good release properties, and slip characteristics, and to provide high receptability for printing ink. Moreover, these surface properties can be enhanced in accordance with this invention without using a thermoplastic material which must have the special characteristic of a softening temperature less than the softening temperature of the web.

Biaxially oriented polypropylene films were produced with various coatings utilizing the coating procedure set forth herein in which a base polypropylene sheet was extruded and oriented in the machine direction utilizing a series of heated metal rolls. Each of the coatings were then applied as an emulsion or a solution to the machine direction oriented polypropylene web by immersing the continuous web in a reservoir, in this case a pan, and then passing the continuous web through reverse or direct gravure rolls to ensure appropriate coating weight, etc. The coated web was subsequently reheated to a temperature sufficient to effect transverse orientation, e.g., at least 138°C (280°F) when the film, or separate layers thereof, contain at least 80% polypropylene, and oriented in the transverse direction utilizing a tenter unit. The resultant product was a biaxially oriented polypropylene film useful for packaging which has good barrier characteristics, such as those set forth in the specific examples, without a subsequent after-treatment step such as corona discharge or flame treatment. By after-treatment step, it is not intended to mean that the once-coated film cannot then be again processed in accordance with a separate coating step in order to provide additional coating material of the same kind, or with other coating materials which may provide different characteristics.

EXAMPLE 1

A 0.018 mm (0.70 mil) solution coated oriented polypropylene single layer film was produced utilizing the hereinbefore described method. The polypropylene resin had a density of 0.91 and a melt flow of 4.5. The coating solution was composed of an acrylic terpolymer of from 30% to 55% by weight of methyl methacrylate, 64% to 39% by weight of methyl acrylate and a 2.5% to 6% by weight of acrylic acid. The terpolymer coating can be further described as containing:

    1) from 30% to 60% by weight based on the weight of a finely divided water insoluble inorganic solid selected from silica, diatomaceous earth, calcium silicate, bentonite and finely-divided clays of particle sizes between 10 and 200 millimicrons,

    2) from 2 to 15 parts per hundred parts of terpolymer of an aqueous alkali soluble rosin comprising an adduct of rosin with an alpha-beta unsaturated dicarboxylic acid esterified with a polyhydric alcohol, and

    3) a cold slip antiblocking agent of finely divided carnuba wax. The base polypropylene film during machine direction orientation was stretched utilizing a stretch ratio of 5:1 at a temperature of between 116° and 149°C (240° and 300°F). Coating solutions of solid content from 15% to 25% was then applied onto the uniaxially oriented web by use of a gravure roll. After coating, the machine direction oriented polypropylene film was stretched in a ratio of 8:1 in the transverse direction at a temperature of between 154° and 182°C (310° and 360°F). The resultant coated film product had a coating thickness of 7% of the overall film thickness. The coating adds functionality to the film in the form of low temperature sealability showing typical seal strengths of 300-400 gm/in. at a temperature range of 116° to 149°C (240° to 300°F).

EXAMPLE 2

The procedure of Example 1 was followed except that the base film was coextruded 3-layer product. The polypropylene was sandwiched between ethylene-propylene copylmer (density 0.90, melt flow rate 6.0) layers, each of which forms 5% of the total film thickness. The resultant film exhibited heat sealability having 400-500 gm/in. seal strengths over seal jaw temperature of 116° to 149°C (240° to 300°F).

## EXAMPLE 3

The procedure of Example 1 was followed except total film thickness was 0.023 mm (0.90 mil) with a coating solution containing a terpolymer of vinylidene chloride (80% by weight), methylacrylate (10% by weight), and methyl methacrylate (10% by weight) with an intrinsic viscosity of 0.17, blended with 5 parts per hundred of the terpolymer of carnuba wax and 0.25 parts per hundred of finely divided talc and applied from an ammoniacal aqueous solution. The coating thickness was 18% of the overall film thickness. The resultant film showed improved oxygen barrier property (4 cc/100in$^2$ atm 24 hrs ASTM D3985) as well as heat sealability at 400-500 gm/in. over temperature range of 240° to 300°F This product makes an excellent food wrap.

## EXAMPLE 4

The procedure of Example 1 was followed except that the coating comprised 0.5% by weight of polyethyleneimine in aqueous solution. The coating thickness is 2% of the overall film thickness. The coating imparts improved adhesion to the web of adhesives, ink, secondary coatings and improvements in metal anchorage. It shows 100% wet-out for water-borne adhesives and ink with bond strengths greater than 150 gm/in.

## EXAMPLE 5

The procedure of Example 1 was followed utilizing a coating composition of an aqueous solution of the reaction product of an acidified aminoethylated vinyl polymer and an epoxy resin applied at 3% of the overall film thickness. Similar improvements as seen in Example 4 were realized for this product.

## EXAMPLE 6

A 0.018 mm (0.7 mil) single layer solution coated oriented 40% polypropylene, 45% polybutylene, and 15% polyterpene blend was produced utilizing the hereinbefore described method. A release coating solution was applied which contained:
94.5% water
0.5% sodium alginate
2.5% polydimethylsiloxane
2.5% polyester emulsion resin
The base blend film during machine direction orientation was stretched utilizing a 5:1 stretch ratio at a temperature of 38° to 66°C (100° to 150°F). After coating, the machine direction oriented film was stretched to a ratio of 6:1 in the transverse direction at a temperature of between 88° to 104°C (190° to 220°F). The coating solution was applied at a rate of from 0.0017 to 0.002 gm of coating per gm of film. The film produced showed significant improvement in antiblock surface characteristics as measured by pack to pack blocking.

## EXAMPLE 7

A 0.018 mm (0.70 mil) solution coated oriented polypropylene 2-layer film was produced having a ethylene-propylene copolymer layer (density 0.90, melt flow rate 6.0) forming 5% of the total film thickness. The polypropylene resin had a density of 0.905 gm/cm$^3$ with a core melt flow (MF) of 4.5. A slip coating solution was applied to the polypropylene side of the composite web, which contained:
92.9% water
0.5% sodium algenate
6.0% silicone polymer
0.6% catalyst
The base polypropylene film during machine direction orientation was stretched utilizing a stretch ratio of 5:1 at a temperature of between 121' and 289°C (250° and 285°F) followed by rapid quenching to 79°C (150°F) on fluid cooled rollers. After coating, the machine direction oriented polypropylene film was stretched to a ratio of 8:1 in the transverse direction at a temperature of between 160' and 182°C (320° and 360°F). The coating solution was applied at 1.1% by weight in the MD oriented condition by drawing the web over a gravure roll coater. The resultant coated film product had a coating weight of approximately 0.05% of the overall film weight.

The film has comparable COF and superior hot slip properties suitable for food packaging, e.g., the COF (according to ASTM DI894) for the product was 0.17-0.19, well within the desired 0.30 range.

## EXAMPLE 8

A 0.018 mm (0.70 mil) single layer solution coated oriented film comprising homopolymer polypropylene is prepared using hereinbefore described method. The slip property of the film is enhanced by the coating of a variety of materials from the group of polydimethylsiloxanes in the 30,000 to 600,000 centi-stoke range, finely divided suspensions of hydrocarbon waxes, and traditional slip agents such as fatty acid amides. The coatings are prepared as aqueous suspensions and applied at various coating weights by varying total solids content and/or by varying gravure speed and cell volume.

It is apparent from the preceding Examples that the surface characteristics of the coated films produced in accordance with Example 1 are equal to or even better than those provided by other means, and, Example 2 shows that the heat seal characteristic is comparable to those provided by more energy-consuming and complex procedures.

It should be realized that the present invention is not linked to the examples set forth, and can include, for example, different coatings applied to each of the two sides of the base film. Furthermore, the coating procedure can be a pattern process which provides selective surface coating.

While there have been described what are presently believed to be the preferred embodiments of the invention, those skilled in the art will realize that changes and modifications may be made thereto without departing from the spirit of the invention, and it is intended to claim all such changes and modifications as fall within the true scope of the invention.

## Claims

1. A process for the continuous production of polypropylene film useful for packaging which has improved surface properties comprising: stretching in the longitudinal direction a continuous web containing polypropylene as a primary component; applying a coating composition to one or both surfaces of the continuous web; preheating the coated web to a temperature sufficient to effect orientation; and orienting the resulting preheated coated web in the transverse direction in the absence of any required after treatment.

2. The process of Claim 1 wherein the web contains from at least 35% polypropylene to 90% polypropylene.

3. The process of Claim 1 or 2 wherein the continuous web is a multilayer web.

4. The process of any of the preceding claims wherein the coating composition is in the form of a solution or an emulsion.

5. The process of any of the preceding claims wherein the coating composition comprises a component selected from acrylic polymers and copolymers, polyvinylidene chloride, polyethylene imine, polyamides, silicones, epoxy resins, styrene based polymers, and emulsifiable polyester.

6. The process of any of the preceding claims wherein the coating composition includes between 1% and 50% coating material based on solids content.

7. The process of any of the preceding claims wherein the coating composition comprises a material selected from a release agent, a slip agent, a heat sealing agent, a receptor-enhancer, and a barrier enhancer.

8. The process of any of the preceding claims wherein the coating material is selected from a release and a slip coating having from 1% to 8% coating material based on solids content and a heat sealing composition having from 15 to 50% material based on solids content.

9. The process of Claim 8 wherein the film has a seal strength from 118 to 197 gm/cm (300 to 500 gm/in.) at a temperature range from 116° to 149 C (240° to 300°F).

10. The process of Claim 7 wherein the slip properties of the film is from 0.17 to 0.19 in accordance with tests set forth in ASTM D1894.

11. The process of any of the preceding claims wherein the film is drawn in the longitudinal direction in a stretch ratio of from 3:1 to 7:1, and oriented in a transverse direction in a stretch ratio of from 6:1 to 10:1.

12. The process of any of the preceding claims wherein an additive which adds chemical functionality to the base web is added up to 5% by weight of the web, the additive being selected from maleic anhydride, polyacrylic acid polymers and copolymers.

13. The process of any of the preceding claims wherein the preheating temperature is from 138° to 204°C (280° to 400°F) when the film includes 80% polypropylene and from 79° to 121°C when the web contains 40% polypropylene.

14. The process of any of the preceding claims wherein the film is passed through a reservoir containing the liquid composition and the transverse direction orientation is effected by a tenter frame.

15. A polypropylene film with improved surface properties comprising: a biaxially oriented polypropylene web having a solution-applied surface coating on one or both surfaces, the surface coating being applied between sequential machine direction and transverse direction orientation steps in the absence of required after treatment steps.